# EUROPÄISCHE PATENTSCHRIFT

(11) **EP 2 366 482 B1**
(45) Veröffentlichungstag und Bekanntmachung des Hinweises auf die Patenterteilung: **18.12.2013**
(21) Anmeldenummer: 11158763.0
(22) Anmeldetag: 18.03.2011
(51) Int. Cl.: B23D 45/10, B23D 59/00, B27G 19/10

(54) **Mehrachsiger Vorritzer**
Multi-axle prescorer
Outil d'entaille à plusieurs axes

(30) Priorität: 18.03.2010 DE 202010000406 U
(43) Veröffentlichungstag der Anmeldung: 21.09.2011
(73) Patentinhaber: Otto Martin Maschinenbau GmbH & Co. KG, 87724 Ottobeuren (DE)
(72) Erfinder: Zeinhofer, Dieter, 87749, Hawangen (DE)
(74) Vertreter: Ernicke, Hans-Dieter

(56) Entgegenhaltungen:
- EP-A1- 0 813 939
- DE-U1- 20 005 348
- DE-U1-202006 004 596
- GB-A- 2 050 939
- US-A1- 2005 039 591

## Beschreibung

Die Erfindung betrifft einen mehrachsigen Vorritzer für Sägemaschinen mit den Merkmalen im Oberbegriff des Hauptanspruchs. Ein solcher Vorritzer ist aus GB 2 050 939 A bekannt.

Aus der DE 20 2006 004 596 U1 ist ein 3-Achs-Vorritzer bekannt, dessen Ritzeinheit sich in drei Achsen verstellen lässt, nämlich in der Höhe, in der Seitenlage und in der Ritzbreite. Für die Verstellung der Ritzbreite und der Seitenlage sind Stellantriebe in Höhe der Ritzeinheit und in Axialrichtung hintereinander angeordnet. Die ganze Einheit lässt sich mit einem Spindelantrieb linear in der Höhe verstellen. Für die Rotation der Ritzeinheit ist eine Antriebseinheit mit einem Riementrieb vorhanden, dessen Abtriebsscheibe oder Riemenscheibe auf einer Achse der Ritzeinheit angeordnet und dabei durch ein Gehäuse axial von der Ritzeinheit beabstandet ist.

Aus der EP 0 813 939 A1 ist ein anderes Ritzwerkzeug bekannt, welches an der Unterseite eines Maschinentischs drehbar gelagert ist und bei dem sich die Ritzbreite verstellen lässt. Dieses Ritzwerkzeug ist nur in einer Achse verstellbar, wofür zwei Ausführungsformen angegeben sind. In der einen Variante besteht das Ritzwerkzeug aus zwei parallelen Ritzblättern, deren Abstand mittels einer in der hohlen Antriebsspindel geführten Abstandswelle verändert wird. In einer anderen Variante besteht das Ritzwerkzeug aus einem einzelnen Ritzblatt, welches eine Taumelbewegung ausführt und dadurch eine Ritze schneidet, die breiter als die Blattbreite ist.

Es ist Aufgabe der vorliegenden Erfindung, einen besseren Vorritzer mit mehr Einsatzmöglichkeiten aufzuzeigen. Die Erfindung löst diese Aufgabe mit den Merkmalen im Anspruch 1.
Der beanspruchte Vorritzer kann eine oder mehrere Stellachsen aufweisen. Der Vorritzer kann schwenkbar gelagert sein. Für den Vorritzer kann sich eine Verstellbarkeit bis zu vier Achsen oder mehr ergeben. Ein mehrachsiger Vorritzer hat besondere Vorteile für moderne Sägemaschinen, insbesondere Formatkreissägen, bei denen das Sägeblatt nach einer oder zwei Richtungen, insbesondere von der Bedienungsseite her gesehen nach vorne und/oder hinten verschwenkbar ist. Der Vorritzer kann dieser Schwenkbewegung des Sägeblatts folgen und eine optimale Vorritzfunktion ausführen. Vorteilhafterweise bleibt auch in den Schwenklagen die Verstellbarkeit des Vorritzers um eine oder mehrere Stellachsen erhalten. Der Vorritzer kann in allen Schwenklagen in der Höhe und/oder der Seitenlage gegenüber dem Sägeblatt und/oder seiner Ritzbreite verstellt werden.

Der beanspruchte mehrachsige Vorritzer hat eine schlanke Bauform, die sich nach oben hin verjüngt. Die im wesentlichen V-förmige Störkontur im Kopfbereich hat Vorteile für den beanspruchten Bauraum und auch die Schwenkbarkeit des Vorritzers. In der gezeigten Ausführungsform sind z.B. beidseitige Schwenkwinkel aus der Vertikallage um bis zu ca. 46° möglich. Die schlanke Bauform hat auch Vorteile in Verbindung mit konventionellen Sägemaschinen, insbesondere Kreissägen, bei denen das Sägeblatt nicht verschwenkbar ist. In diesem Fall kann auch auf eine Schwenklagerung des Vorritzers verzichtet werden. Günstig ist in allen Bauformen die Minderung der Baugröße, wobei insbesondere an der Unterseite des Maschinentischs Platz gespart und Raum für andere Maschinenkomponenten geschaffen wird.

Für die schlanke Bauform ist insbesondere eine Verlagerung der Stellantriebe und speziell ihrer Antriebsmittel von Vorteil. Die Stellantriebe können aus der Drehachse des Vorritzers heraus nach unten verlagert werden. Hierbei ist es außerdem günstig, wenn der Vorritzer einen Grundträger und einen z.B. als Schwenkhebel oder Lenkergetriebe ausgebildeten Ritzträger aufweist, wodurch die Höhenverstellung mittels einer Schwenkbewegung erfolgt. Für die Seitenlagenverstellung kann eine seitliche Verschiebung des Schwenkhebels auf seiner Schwenkachse stattfinden. Auch die Ritzbreitenverstellung kann mittels eines tiefer gelegten Stellantriebs erfolgen. Bei den aus der DE 20 2006 004 596 U1 und EP 0 813 939 A1 bekannten Vorritzern ist wegen der hoch liegenden Stellantriebe eine Schwenkbewegung nicht oder nur sehr eingeschränkt möglich. Die Stellantriebe der Stellachsen können am Grundträger oder am Ritzträger angeordnet sein und mit dem Grundträger sowie dem Sägeblatt bedarfsweise schwenken.

Der mehrachsige Vorritzer kann eine Ritzeinheit aufweisen, die lösbar an einer Antriebseinheit angeordnet ist und die insbesondere als handhabbare und demontierbare Baueinheit ausgebildet sein kann. Dies hat verschiedene Vorteile. Einerseits kann die Ritzeinheit bei Einsatz von besonders großen Sägeblättern abgenommen werden. Der Sägeblattdurchmesser lässt sich hierdurch wesentlich vergrößern und kann bis in den zuvor von der Ritzeinheit eingenommenen Bereich ragen. Dies vergrößert die Einsatzbreite der Sägemaschine. Außerdem wird die Wartung der Ritzeinheit vereinfacht. Austauschbare Ritzeinheiten können differierende Blatt- und Zahnformen aufweisen und an unterschiedliche Werkstücke angepasst werden. Die Montage und Demontage der Ritzeinheit kann ggf. ohne Werkzeug erfolgen. Die Gestaltung der Ritzeinheit erleichtert auch die Ausbildung der Stellachse für die Ritzbreitenverstellung und ist günstig für die Verschlankung des Vorritzers. Das Stellmittel kann von außen an einem nicht drehenden Druckstück der rotierenden Vorritzeinheit angreifen und wird von dem tiefer liegenden Antriebsmittel beaufschlagt. Die federbelastete Ritzeinheit wird zur Breiteneinstellung an einer Seite, z.B. der Rückseite vom Ritzträger gehalten und abgestützt und wird an der gegenüberliegenden Seite, z.B. der Vorderseite von dem Stellmittel mit einem steuerbaren Weg und mit ausreichend hoher Druckkraft beaufschlagt. Die Ritzeinheit mit Ritzträger und Stellmittel baut dadurch in Achsrichtung besonders schmal und schlank. Das Stellmittel kann über eine platzsparende Kraftumlenkung betätigt werden, wobei es z.B. als schwenkbarer Stellhebel ausgebildet ist. Das Stellmittel kann mehrteilig sein, wobei die z.B. zwei Teile relativ zueinander in ihrer Lage veränderbar, z.B. schwenkbar sind. Der Eingriff zwischen der Ritzbreitenverstellung, insbesondere deren Stellmittel, und der Ritzeinheit kann einfach und schnell gelöst werden, wobei das Stellmittel auch bei Einsatz großer Sägeblätter aus dem Störbereich kommt.

Die Stellantriebe für den Vorritzer sind vorzugsweise spielfrei ausgebildet, was eine besonders exakte Einstellung der Höhe, Seitenlage bzw. Ritzbreite erlaubt. Diese Präzision ist auch in den verschiedenen Schwenklagen des Vorritzers gegeben. Pneumatische Antriebe in Verbindung mit steuerbaren Begrenzern für den Stellweg sind für die Spielfreiheit günstig und haben außerdem den Vorteil einer kleinen Baugröße. Für die Verkleinerung der Baugröße und der Störkontur ist es von Vorteil, wenn Teile der Stellachsen bzw. ihrer Stellantriebe beidseits des Grundträgers und des Ritzträgers angeordnet sind, wobei diese Träger vorteilhafterweise plattenförmig ausgebildet sind und ebenfalls schmal bauen. Andererseits ist eine gemeinsame Anordnung der Stellantriebe, insbesondere von deren Antriebsmitteln und ggf. Begrenzern, an einer Seite des Grundträgers für die Zugänglichkeit bei Wartung und Montage günstig. Hierbei kann durch eine Ausrichtung der Wirkrichtungen von Antriebsmitteln und ggf. Begrenzern parallel zu einer Hauptebene des Grundträgers ebenfalls eine kompakte Bauweise und kleine Störkontur erreicht werden.

Eine hohe Stellpräzision kann durch steuerbare rotierende Stellmotoren, z.B. schrittmotoren, mit Stellspindeln erreicht werden, die ggf. mit Anschlägen zur Bildung von Begrenzern für einen oder mehrere Stellantriebe, insbesondere für die Höhen- und Seitenlagenverstellung, zusammenwirken. Auch für die Ritzbreitenverstellung ist eine solche Antriebstechnik von Vorteil, wobei der Spindeltrieb gegen eine rückstellende Feder arbeitet und vorzugsweise für eine Entlastung der Ritzeinheit und eine Vergrößerung der Ritzbreite sorgt.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine schematische Ansicht einer Formatkreissäge mit einem schwenkbaren Sägeblatt und einem verborgenen mehrachsigen Vorritzer,
- Figur 2:: eine Stirnansicht der Sägemaschine gemäß Pfeil II von Figur 1 mit einer Darstellung der verschiedenen Schwenklagen von Sägeblatt und Vorritzer,
- Figur 3:: eine aufgebrochene Ansicht der Sägemaschine mit einer perspektivischen Darstellung des Sägeblatts nebst Antrieb und des Vorritzers gemäß Pfeil III von Figur 1,
- Figur 4:: eine aufgebrochene Stirnansicht der Sägemaschine gemäß Pfeil IV von Figur 1 mit Blick auf das Sägeblatt nebst Antrieb und den Vorritzern,
- Figur 5:: eine aufgebrochene Unteransicht der Sägemaschine gemäß Pfeil V von Figur 1,
- Figur 6:: eine Stirnansicht einer ersten Ausführungsform eines Vorritzers von Figur 1 - 5,
- Figur 7:: eine Draufsicht auf den Vorritzer gemäß Pfeil VII von Figur 6,
- Figur 8:: einen Schnitt durch den Vorritzer gemäß Schnittlinie VIII-VIII von Figur 6,
- Figur 9:: eine Rückansicht einer Ritzeinheit,

- Figur 10:: ein abgebrochener Querschnitt durch die Ritzeinheit von Figur 6 - 9,
- Figur 11:: eine Stirnansicht des Vorritzers von Figur 6 mit gelöster Ritzbreitenverstellung,
- Figur 12:: eine Draufsicht auf den Vorritzer gemäß Pfeil XII von Figur 11,
- Figur 13:: eine Stirnansicht des Vorritzers von Figur 6 und 11 in einer Entnahmestellung mit entfernter Ritzeinheit,
- Figur 14:: einen Schnitt durch den Vorritzer gemäß Schnittlinie XIV-XIV von Figur 13,
- Figur 15:: eine Stirnansicht einer zweiten Ausführungsform eines Vorritzers,
- Figur 16:: einen Schnitt durch den Vorritzer gemäß Schnittlinie XVI-XVI von Figur 15 und
- Figur 17:: einen Schnitt durch den Vorritzer gemäß Schnittlinie XVII-XVII von Figur 15.

Die Erfindung betrifft einen mehrachsigen Vorritzer (3) für Sägemaschinen (1), insbesondere Kreissägen, speziell Formatkreissägen. Die Erfindung betrifft ferner eine Ritzeinheit (6) des Vorritzers (3), die eigene erfinderische Bedeutung hat. Die Erfindung befasst sich außerdem mit einem Verfahren zur mehrachsigen Einstellung eines mehrachsigen Vorritzers (3) und einer Sägemaschine (1) .

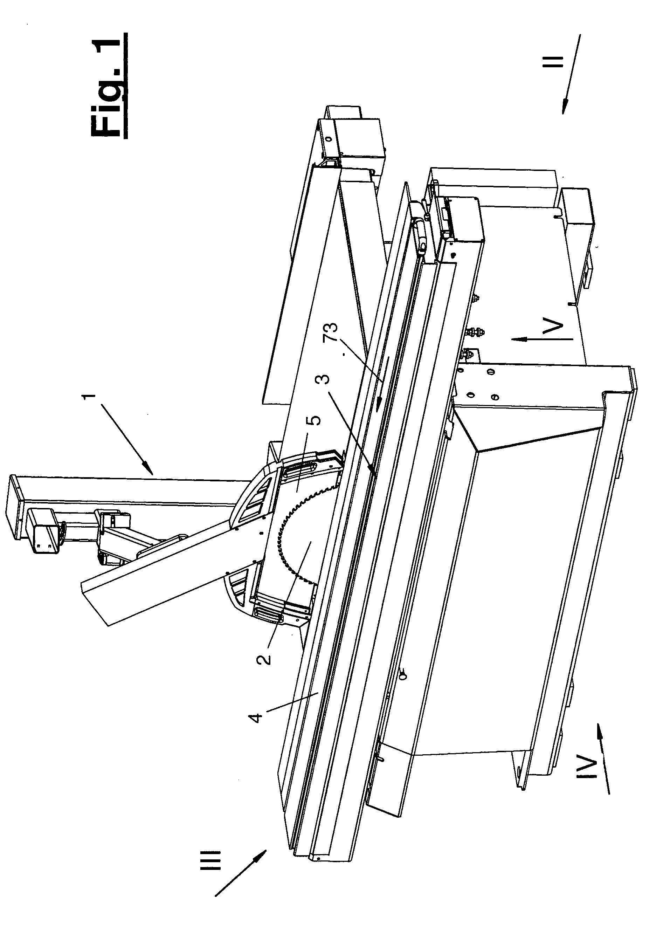

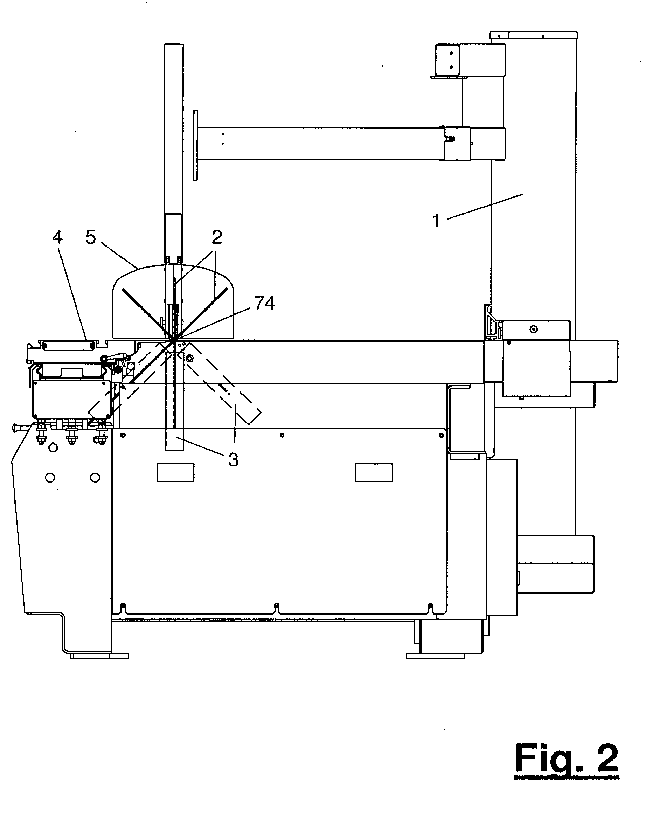

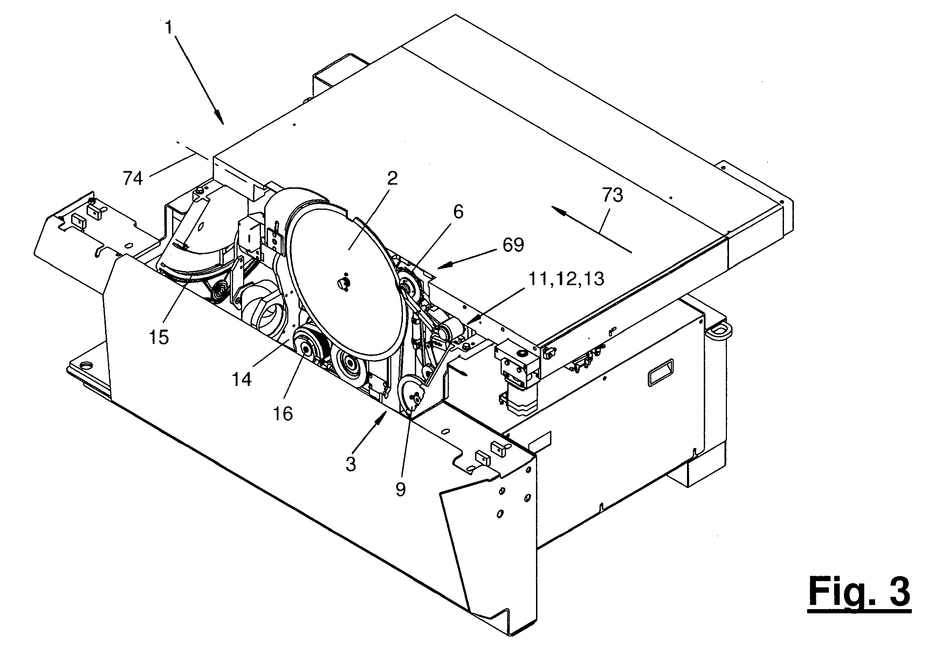

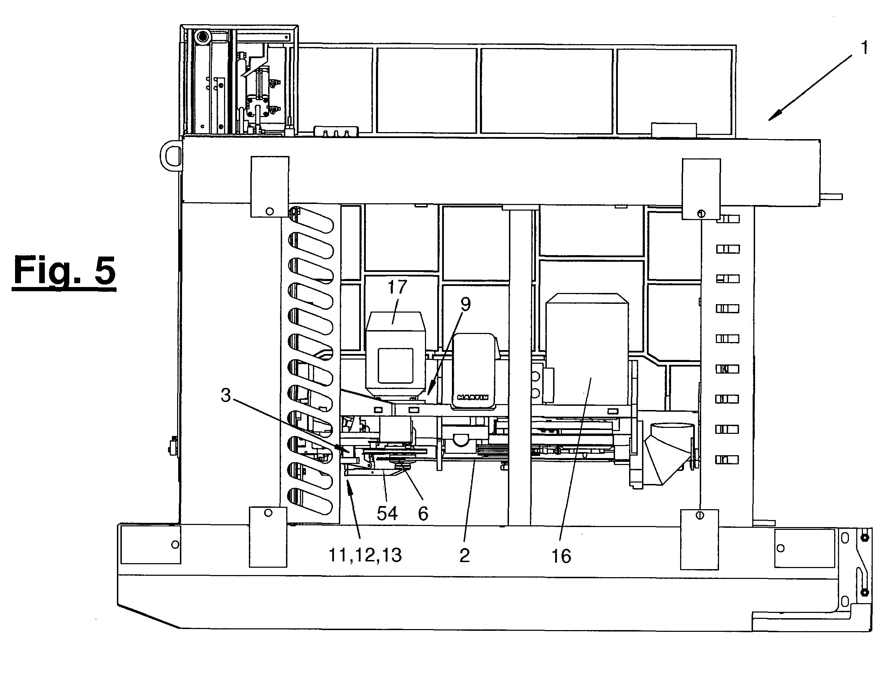

Die Sägemaschine (1) ist in Figur 1 bis 5 schematisch dargestellt. Sie ist z.B. als Kreissäge, insbesondere als Formatkreissäge ausgebildet und weist ein z.B. einzelnes rotierendes, kreisrundes Sägeblatt (2) mit einem Sägeblattantrieb (16) auf. Das durch eine Sägetischöffnung ragende Sägeblatt (2) kann in einer einfachen Ausführungsform eine feste Vertikalausrichtung haben und lässt sich ggf. in der Höhe und auch seitlich verstellen. In der bevorzugten Ausführung einer Sägemaschine (1), z.B. einer Formatkreissäge, ist das Sägeblatt (2) um eine längs der Sägeblatthauptebene sich erstreckende und z.B. horizontale Achse (74) schwenkbar oder kippbar gelagert. Die Schwenk- oder Kippachse (74) kann z.B. etwa in Höhe der Sägetischöffnung liegen. Das schwenk- oder kippbare Sägeblatt (2) kann hierfür mit seinem Antrieb (16) an einem Schwenkträger (14) mit gebogener Schwenkführung (15) gemäß Figur 3 angeordnet sein. Der Schwenkträger (14) ist ebenfalls um eine längs der Sägeblatthauptebene sich erstreckende Achse (74) schwenkbar. Das Sägeblatt (2) kann an der Bedienungsseite gemäß Pfeil IV von Figur 1 aus gesehen nach vorn und/oder hinten verschwenkt werden. Der Schwenkwinkel kann z.B. bis zu ca. 46° oder mehr betragen. Figur 2 zeigt die Schwenk- oder Kippachse (74) und die beidseitigen Schwenklagen.

Die Sägemaschine (1) kann einen Maschinentisch (4) mit der besagten Tischöffnung aufweisen, der z.B. als Besäumtisch ausgebildet ist. Ferner kann eine Schutzhaube (5) für das Sägeblatt (2) vorhanden sein, die sich ggf. in ihrer inneren seitliche Weite verstellen und an die verschiedenen Schwenklagen und die entsprechenden seitlichen Auslagen des Sägeblatts (2) anpassen lässt. Figur 2 zeigt diese Anordnung. Ferner weist die Sägemaschine (1) weitere Komponenten, insbesondere eine Steuerung, eine Staub- und Haubenabsaugung, Führungen, Bedienmittel und dgl. auf.

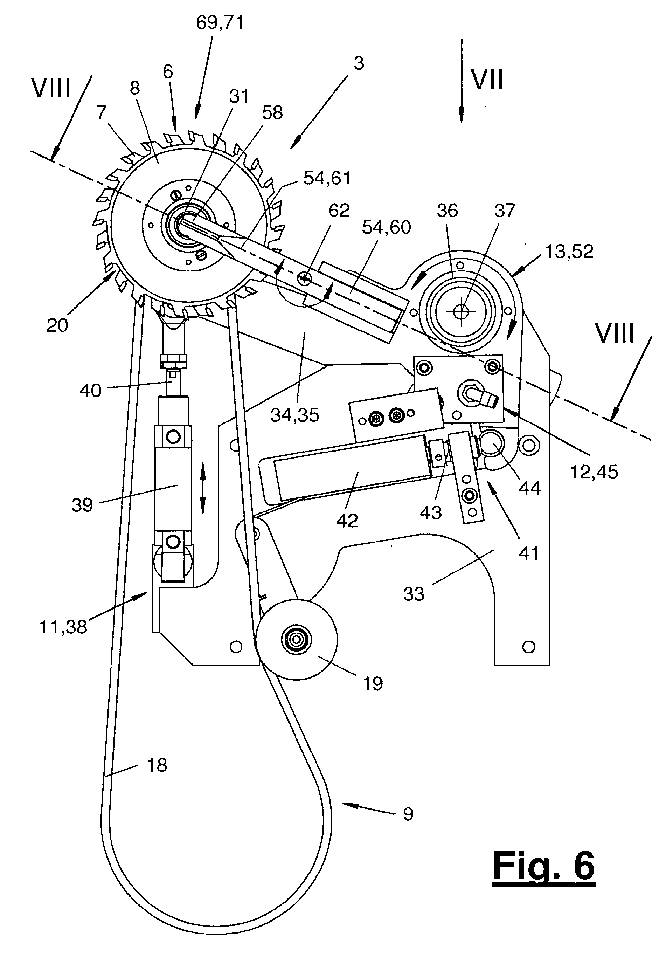

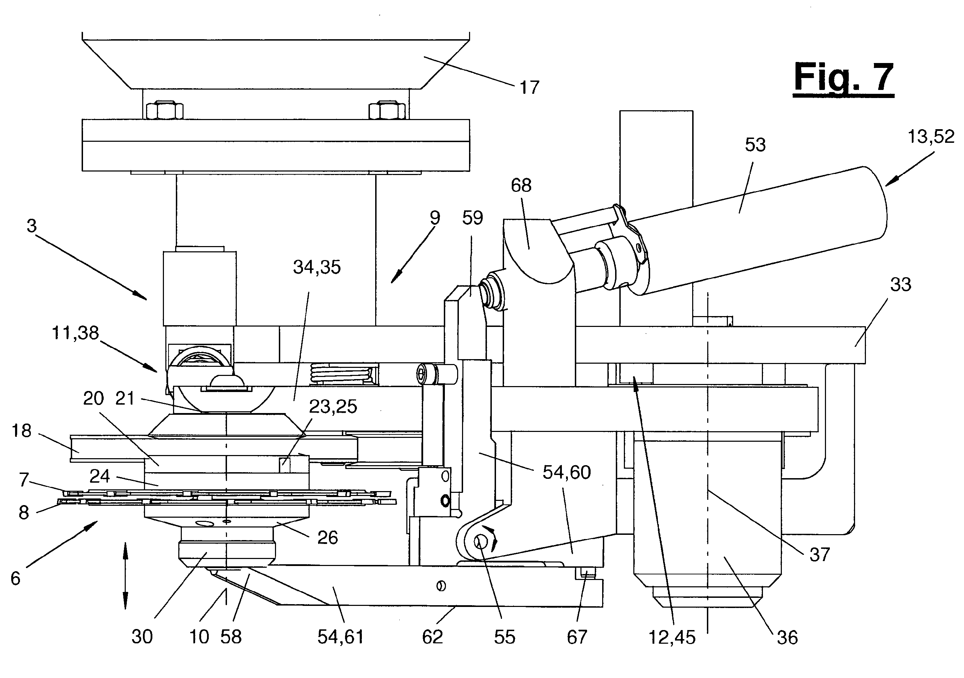

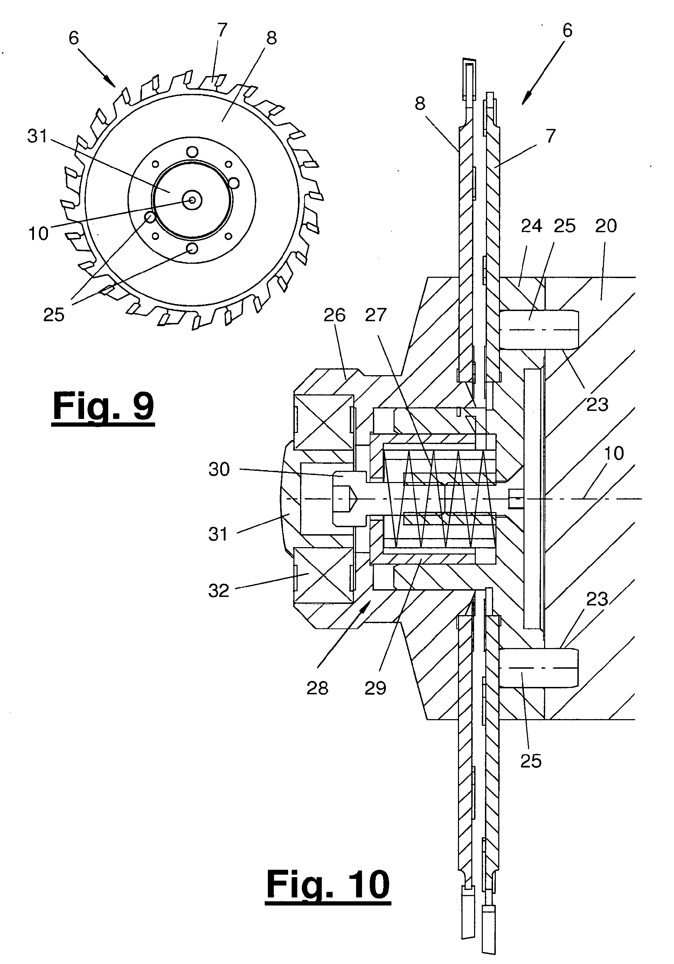

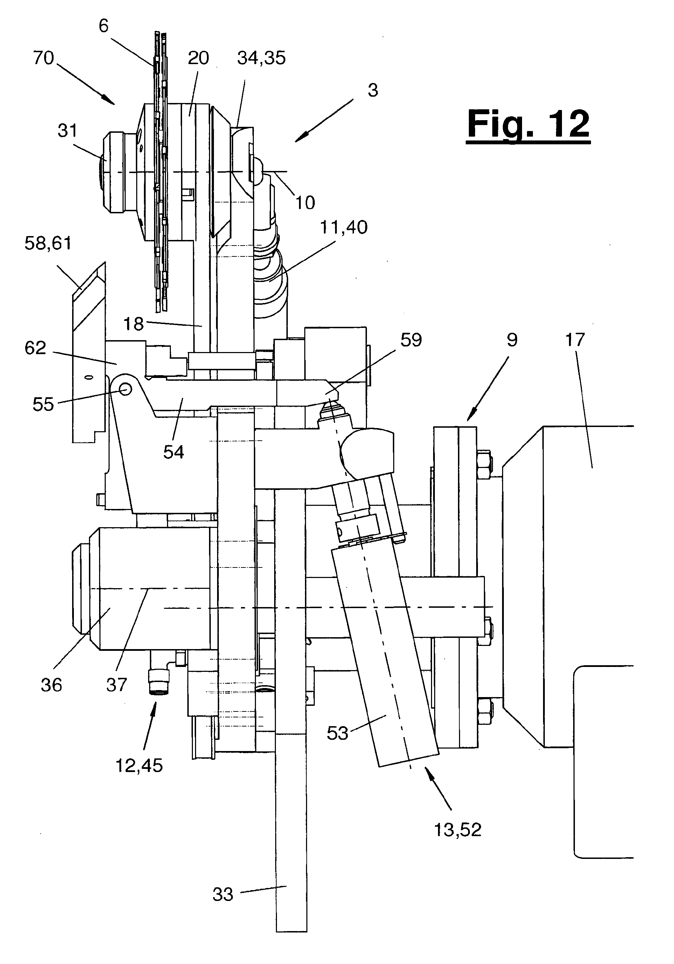

Figur 6 bis 14 und Figur 15 bis 17 zeigen verschiedene Ausführungsformen eines Vorritzers (3).

Der Vorritzer (3) befindet sich in beiden Varianten an der Unterseite des Maschinentischs (4) in Vorschubrichtung (73) des Werkstücks (nicht dargestellt) vor dem Sägeblatt (2), welches den Trennschnitt durchführt. Der Vorritzer (3) bringt an der Werkstückunterseite eine Nut ein, um ein Ausreissen von Material durch das nachfolgende Sägeblatt (2) zu verhindern. Hierfür ist der Vorritzer (3) in seiner Seitenlage mittels einer Stellachse (12) auf die Lage und Ausrichtung des Sägeblatts (2) einstellbar und fluchtet mit diesem. Die Vorritznut und der Trennschnitt fluchten dabei in Vorschubrichtung (73) des Werkstücks, welches z.B. ein Holzwerkstück mit einer Beschichtung, z.B. einem Furnier, einer Kunststoffschicht oder dgl. ist.

Der Vorritzer (3) kann ferner eine Stellachse (11) für seine Höhenverstellung gegenüber dem Maschinentisch (4) aufweisen. Hierdurch kann die Tiefe der Vorritznut eingestellt werden. Außerdem kann der Vorritzer (3) eine Stellachse (13) für die Breitenverstellung seiner rotierenden Ritzeinheit (6) aufweisen. Hierdurch kann die Breite der Vorritznut eingestellt werden. Die von einer Antriebseinheit (9) angetriebene Ritzeinheit (6) rotiert um eine Drehachse (10) mit einer Drehbewegung im Schnittbereich in Vorschubrichtung (73) und kann eine hohe Drehgeschwindigkeit, von z.B. ca. 10.000 U/min haben.

In den gezeigten Ausführungsformen weist der Vorritzer (3) alle drei vorerwähnten Stellachsen (11,12,13) auf. In einer anderen vereinfachten Ausführungsform können nur eine oder zwei dieser Stellachsen (11,12,13) vorhanden sein. Z.B. kann nur eine Stellachse (11) zur Höhenverstellung vorhanden sein, wobei unter Verzicht auf eine Lagen- und/oder Ritzbreitenverstellung ein ggf. einteiliges Ritzblatt bei Bedarf manuell verschoben oder gewechselt wird. In weiterer Abwandlung sind beliebige Kombinationen von zwei Stellachsen (11,12,13) möglich.

Wenn das Sägeblatt (2) in der vorerwähnten Weise um eine Achse (74) schwenkbar ist, kann der Vorritzer (3) ebenfalls schwenkbar ausgebildet sein und dadurch eine zusätzliche Achse haben, so dass seine Achsenzahl z.B. zwei, drei oder vier beträgt. In den gezeigten Ausführungsformen besitzt der Vorritzer (3) vier Achsen (11,12,13,74). Auf die Schwenkachse (74) kann alternativ verzichtet werden. Der Vorritzer (3) kann in einem solchen Fall stationär an der Sägemaschine (1) angeordnet sein und eine oder mehrere der beschriebenen Stellachsen (11,12,13) aufweisen.

Wenn der Vorritzer (3) in Anpassung an eine Sägeblattneigung schwenkbar ist, hat er vorzugsweise die gleiche Schwenkachse (74) wie das Sägeblatt (2). Er kann dabei eigenständig gelagert sein. In den gezeigten und bevorzugten Ausführungsformen ist der Vorritzer (3) gemeinsam mit dem Sägeblatt (2) am Schwenkträger (14) angeordnet. Dessen Schwenkführung (15) ist z.B. konzentrisch zur Schwenk- oder Kippachse (74) gebogen.

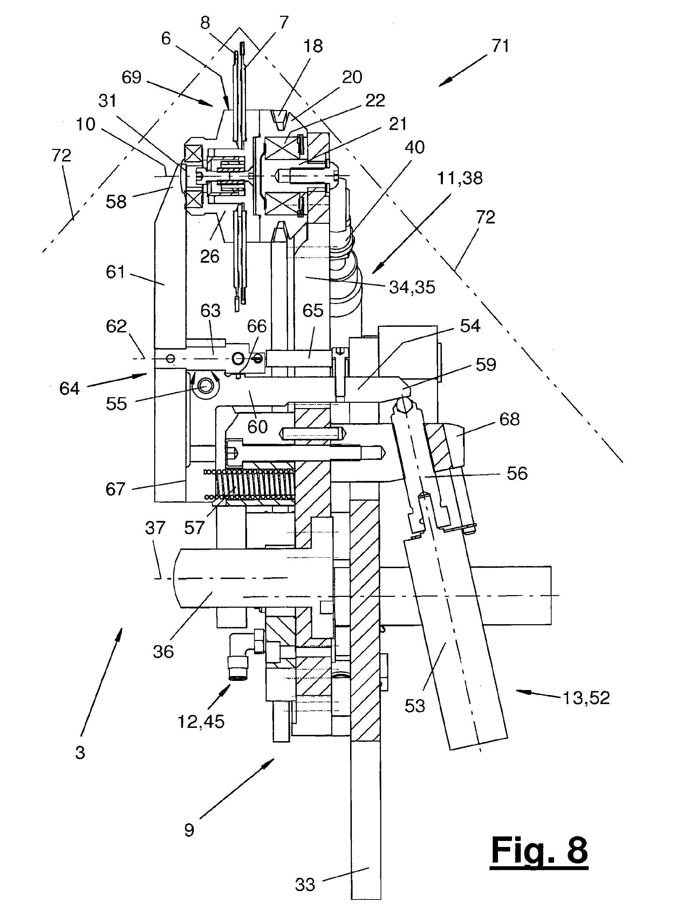

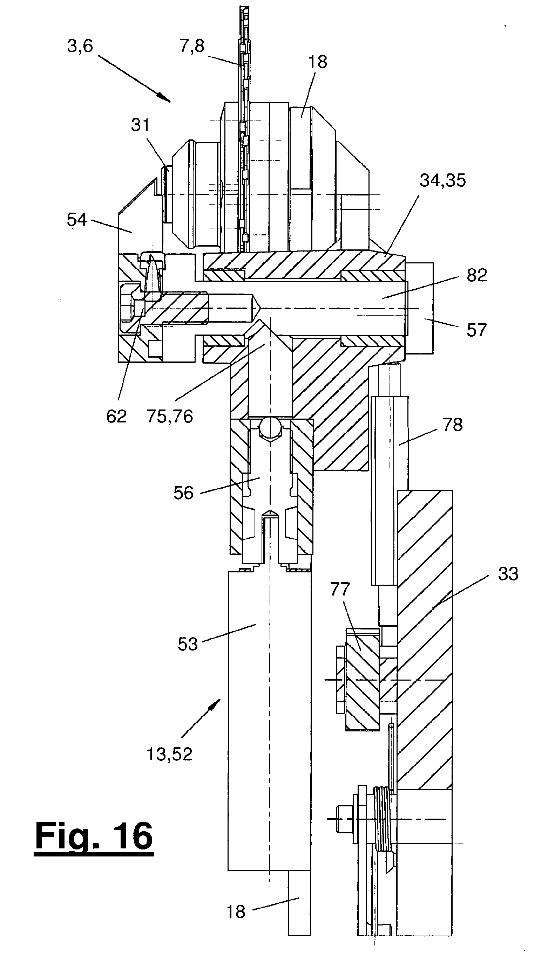

Wie Figur 8 und 16 verdeutlichen, hat der Vorritzer (3) eine schlanke Form, die sich zum Kopfbereich (71) hin verjüngt. Er erhält dadurch eine im wesentlichen V-förmige Störkontur (72), die Schwenkbewegungen des Vorritzers (3) entgegenkommt und gegenüber der benachbarten Tischunterseite genügend Freiraum lässt. Im Kopfbereich (71) befinden sich vornehmlich die Ritzeinheit (6), ein Trägerteil und ein Stellmittel (54) der Breitenverstellung (13). Die Stellantriebe (38,45,52) der Stellachsen (11,12,13), insbesondere deren Antriebsmittel (39,46,53) sind unterhalb der Ritzeinheit (6) sowie der Drehachse (10) und mit Abstand hierzu angeordnet. Sie können auch eine von der Drehachsenrichtung (10) abweichende Wirk-oder Stellrichtung haben.

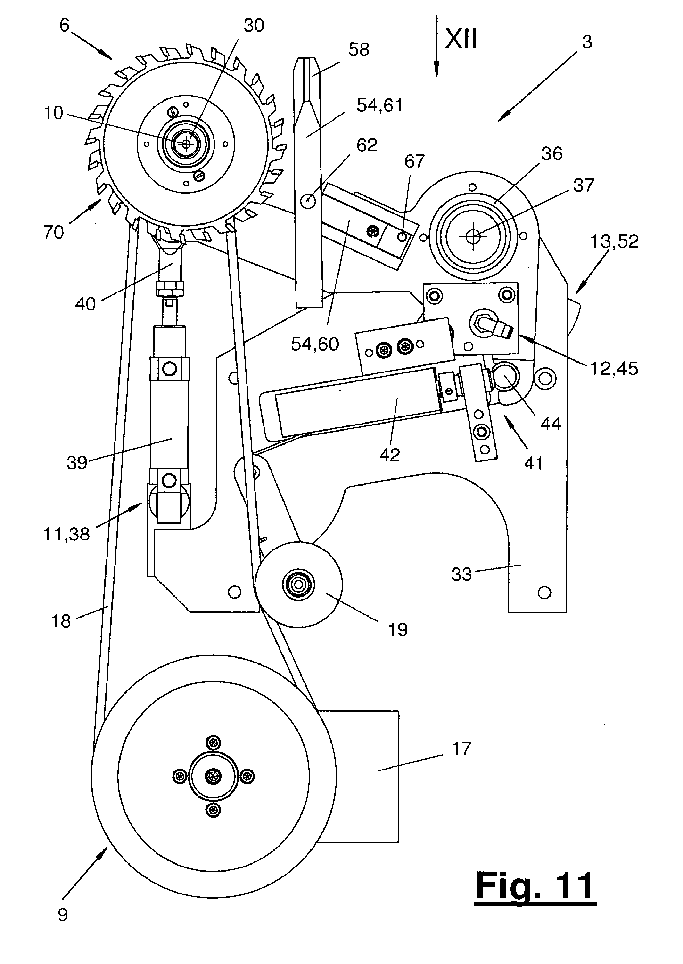

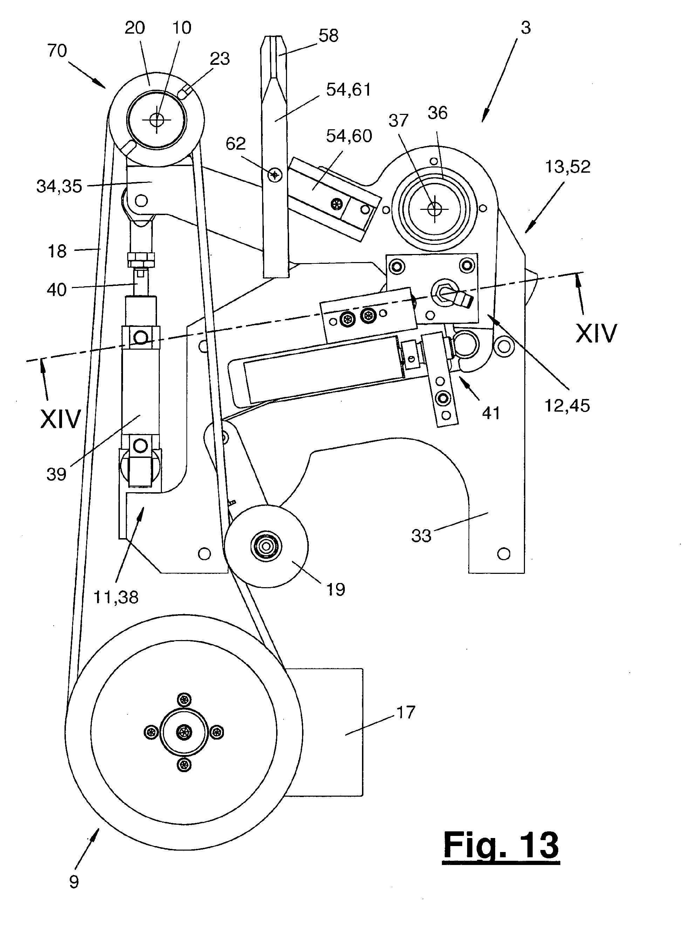

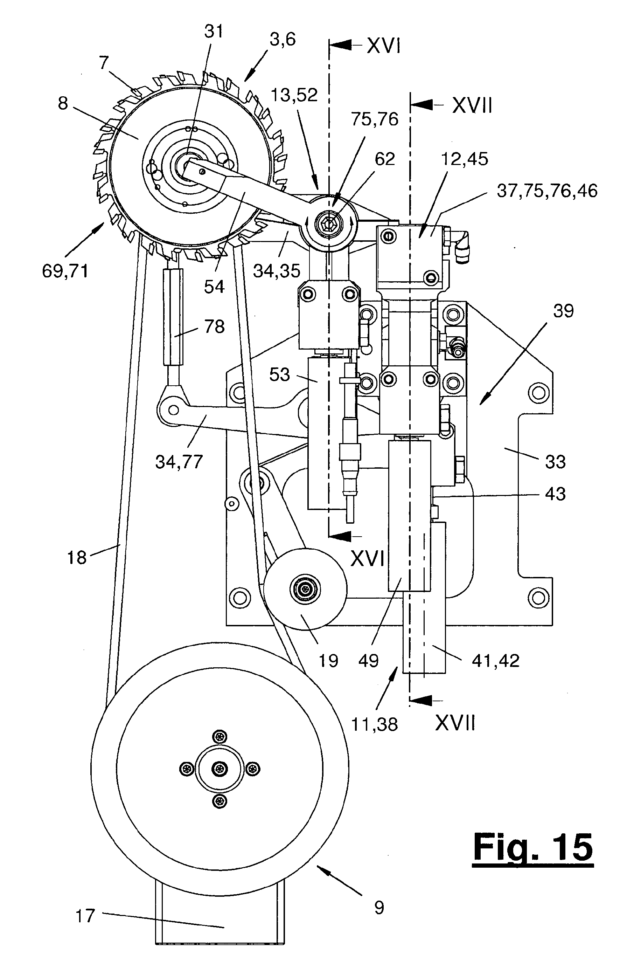

Der mehrachsige Vorritzer (3) besteht aus der Ritzeinheit (6) und der Antriebseinheit (9) sowie einem Grundträger (33) und einem Ritzträger (34). Diese Anordnung ist in Figur 6, 11, 13 und 15 in Frontansicht dargestellt. Die Ritzeinheit (6), die in ihren Einzelteilen in Figur 6, 9 und 10 gezeigt ist, ist als handhabbare und demontierbare Baueinheit ausgebildet. Die Ritzeinheit (6) ist lösbar an der Antriebseinheit (9) angeordnet und kann ohne Zuhilfenahme von Werkzeugen abgenommen und ggf. gewechselt werden. Hierzu kann die Stellachse (13) für die Breitenverstellung deaktiviert werden. Figur 6 und 15 zeigen die Arbeitsstellung (69). In Figur 11 und 13 ist jeweils die Entnahmestellung (70) mit deaktivierter Stellachse (13) dargestellt, wobei in Figur 13 die Ritzeinheit (6) abgenommen ist. Die demontierbare Ausbildung der Ritzeinheit (6) und des Vorritzers (3) haben eine eigenständige erfinderische Bedeutung.
Letzteres gilt auch für die Ritzbreitenverstellung mit der Stellachse (13). Die demontierbare Ausbildung und/oder die Ritzbreitenverstellung können auch bei anderen Vorritzerkonstruktionen eingesetzt werden. Dies können z.B. bekannte, ggf. einachsig oder mehrachsig verstellbare oder zustellbare Vorritzer ohne schwenkbare Lagerung des Vorritzers (3) sein. Bei solchen Vorritzern können z.B. im Kopfbereich (71) Stellantriebe, insbesondere Antriebsmittel, angeordnet sind, wie dies z.B. beim eingangs genannten Stand der Technik gezeigt ist.

Die Antriebseinheit (9) besteht in den gezeigten Ausführungsbeispielen aus einem tiefliegenden Motor (17) mit einer Treibscheibe, einem biegeelastischen Triebmittel (18) und einer Abtriebsscheibe (20) im Kopfbereich (71), an der die Ritzeinheit (6) montiert werden kann. Das Triebmittel (18) kann z.B. als Riemen, insbesondere als Keilriemen, Flachriemen oder Zahnriemen ausgebildet sein. Alternativ ist eine Ausführung als Kette, Seil oder dgl. möglich. Ein Spanner (19) wirkt auf das Triebmittel (18) ein und kann einen Ausgleich für eine Höhenverstellung (11) der Ritzeinheit (6) bieten. Der Spanner (19) besteht z.B. aus einem Schwenkarm mit einer Rückstellfeder und einer frei drehbaren Andruckscheibe.

Der Grundträger (33) kann als konturierte und mit Aussparungen versehene Platte ausgebildet sein. Im Falle einer Schwenklagerung kann er mit dem Schwenkträger (14) verbunden sein. Der Ritzträger (34) trägt am freien oberen Ende einen Lagerflansch (21), an dem mittels eines ringförmigen Lagers (22), insbesondere eines Wälzlagers, die Abtriebsscheibe (20) frei drehbar gelagert ist. Die Abtriebsscheibe (20) ist als Riemenscheibe mit einer umfangseitigen Aufnahme, z.B. einer Nut, für das Triebmittel (18) ausgeführt, welches zwischen dem Ritzträger (34) und der Ritzeinheit (6) sich in vertikaler Richtung erstreckt. Der Ritzträger (34) ist relativ zum Grundträger (33) beweglich. Die Beweglichkeit kann hinsichtlich einer Achse (11) für die Höhenverstellung und/oder einer Achse (12) für die seitliche Lagenverstellung bestehen. Hierfür sind ein Stellantrieb (38) und/oder ein Stellantrieb (45) vorgesehen.

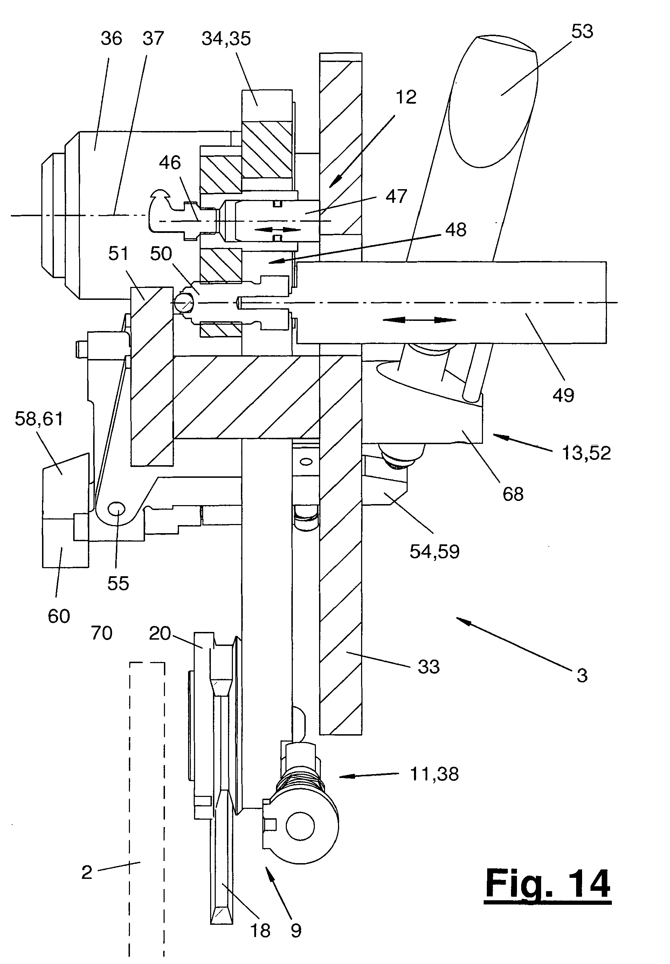

Die relative Beweglichkeit zwischen Grundträger (33) und Ritzträger (34) kann unterschiedlich ausgebildet sein. Im einen gezeigten Ausführungsbeispiel von Figur 6 bis 14 ist der Ritzträger (34) als Schwenkhebel (35) ausgebildet und hat ebenfalls eine schmale Plattenform. Er ist am parallelen Grundträger (33) über ein Lager (36) mit einer Achse (37) gelagert. Dies kann ein kombiniertes Schwenk-und Schiebelager sein, welches für die Höhenverstellung (11) eine Schwenkbewegung und für die Lagenverstellung (12) eine seitliche Schiebebewegung des Schwenkhebels (35) ermöglicht. Figur 6 verdeutlicht die Höhenverstellung (11) und Figur 14 die Lagenverstellung (12).

Die Stellachsen (11,12,13), insbesondere deren Stellantriebe (38,45,52), sind spielfrei ausgebildet. Eine oder mehrere Stellachsen (11,12) können für die Verstellung der Ritzeinheit (6) zwischen dem Grundträger (33) und dem Ritzträger (34) angeordnet sein.

Der Stellantrieb (38,45) für die Höhenverstellung und/oder die Lagenverstellung (12) ist in der einen Ausführungsform von Figur 6 bis 14 als pneumatischer Antrieb mit einem steuerbaren Begrenzer (41,48) ausgebildet. Der Begrenzer (41,48) bietet einen genau einstellbaren Anschlag und begrenzt die Schwenkbewegung und/oder Schiebebewegung des Ritzträgers (34) gegenüber dem Grundträger (33).

Die Stellachse (11) für die Höhenverstellung weist einen mit Abstand zur Schwenkachse (37) angeordneten und am Grundträger (33) abgestützten Stellantrieb (38) auf, der als Antriebsmittel (39) z.B. einen pneumatischen Zylinder mit einer ausfahrbaren Kolbenstange (40) als Stellmittel besitzt. Alternativ kann ein anderer linearer Antrieb, z.B. ein Spindeltrieb oder dgl., eingesetzt werden. Das Antriebsmittel (39) ist z.B. im wesentlichen aufrecht bzw. vertikal ausgerichtet, wobei das Stellmittel (40) am freien Ende des Ritzträgers (34) auf Höhe oder unterhalb des Lagerflansches (21) gelenkig angreift. Figur 13 zeigt diese Anordnung. Der Zylinder (39) drückt das Trägerende und die Ritzeinheit (6) nach oben.

Die Schwenkbewegung um die Achse (37) und damit der Höhenweg der Ritzeinheit (6) wird durch den Begrenzer (41) limitiert. Er besteht aus einem steuerbaren Stellmotor (42), z.B. einem elektrischen Schrittmotor oder einem anderen positionsgenau steuerbaren Motor mit einer abtriebseitigen Stellspindel (43), deren Außengewinde mit einer am Grundträger (33) angeordneten Mutter oder Fassung kämmt. Am Spindelende ist ein Anschlag (44) angeordnet. Er besteht z.B. aus einer an der Spindel befestigten Kugel oder dgl., die mit einer entsprechenden Aufnahme am Ritzträger (34) zusammenwirkt. Diese Aufnahme kann eine Rinnen- oder Nutenform haben und Verstellbewegungen der Stellachse bzw. Lagenverstellung (12) zulassen. Die Motordrehung wird über den Gewindeeingriff in einen Spindelvorschub umgesetzt. Die vorschubabhängige Stellung des Anschlags (44) begrenzt und definiert die Höhenstellung der Ritzeinheit (6). Figur 6 zeigt diese Anordnung.

Die Lagenverstellung (12) weist gemäß Figur 14 einen Stellantrieb (45) auf, der ein am Ritzträger (34) angeordnetes Antriebsmittel (46) mit einem auf den Grundträger (33) wirkenden Stellmittel (47) aufweist. Das Antriebsmittel (46) kann z.B. ein pneumatischer Zylinder und das Stellmittel (47) ein Kolben sein. Der Stellantrieb (45) drückt den Ritzträger (34) vom Grundträger (33) weg. Dieser Seitenhub wird durch den steuerbaren Begrenzer (48) limitiert, der ähnlich wie der der Begrenzer (41) aus einem Stellmotor (49) mit einer Stellspindel (50) und einem Anschlag (51) besteht. Die Stellspindel (50) steht im Gewindeeingriff mit dem Ritzträger (34) und drückt gegen den von einem Winkel an der Grundplatte (33) gebildeten Anschlag (51). Eine Kugel oder dgl. am Spinedelende sorgt für Bewegungstoleranz gegenüber einer anderen Stellachse (11). Die Ausfahrlänge der Stellspindel (50) definiert den seitlichen Abstand der Träger (33,34) und damit die seitliche Lage der Ritzeinheit (6) relativ zum Sägeblatt (2).

Die Ritzeinheit (6) ist in Figur 8 bis 10 näher dargestellt. Sie besteht aus zwei parallelen Ritzblättern (7,8), die am äußeren Umfang Sägezähne in geeigneter Ausbildung tragen können und die mit ihren Zähnen ggf. in gegenseitiger Verdrehung auf Lücke gesetzt sind. Der Abstand zwischen den Ritzblättern (7,8) kann mittels einer nachfolgend beispielhaft erläuterten Stellachse bzw. Breitenverstellung (13) variiert werden. Das eine Ritzblatt (7) ist an einem Flansch (24), insbesondere einem Festflansch, lösbar mit Schrauben oder dgl. befestigt, welcher über Mitnehmer (23,25) mit der Abtriebsscheibe (20) drehschlüssig koppelbar ist. Hierbei kann die vorerwähnte lösbare Verbindung bestehen, die durch die Stellachse (13) gesichert werden kann. Alternativ kann eine feste Verbindung mit Schrauben oder dgl. Befestigungsmitteln vorliegen. Bei der gezeigten lösbaren Verbindung bestehen die Mitnehmer (23) an der Abtriebsscheibe (20) aus Öffnungen, welche stiftartige Mitnehmer (25) am Festflansch (24) aufnehmen. Für die Zentrierung kann ein zentraler Führungsflansch an der Abtriebsscheibe (20) vorhanden sein.

Das andere Ritzblatt (8) ist an einem Flansch (26), insbesondere einem Losflansch, angeordnet, der drehschlüssig und zugleich axial beweglich bzgl. der Drehachse (10) mit dem Festflansch (24) verbunden ist, z.B. durch eine Keilführung oder dgl. Über die axiale Verschiebebewegung des Losflansches (26) wird die Ritzbreite und der Abstand zwischen den Ritzblättern (7,8) eingestellt.

Im Innenraum der ineinander greifenden Flansche (24,26) ist eine Feder (27), z.B. eine Druckfeder, angeordnet, welche die Flansche (24,26) zu spreizen versucht. Ein Abstandsbegrenzer (28) limitiert den Federweg und verbindet die Flansche (24,26) zu einer Baueinheit. Der Abstandsbegrenzer (28) besteht z.B. aus einer Hülse (29) und einem Anschlagmittel (30), z.B. einer Anschlagschraube. Die Hülse (29) übergreift die Feder (27) und bildet eine Druckhülse, welche zentral von der Anschlagschraube (30) durchsetzt wird. Durch Verstellung der Anschlagschraube (30) kann der Hülsenhub und der Federweg begrenzt werden. Im gezeigten Ausführungsbeispiel ist die Anschlagschraube (30) zweiteilig ausgebildet und besteht aus zwei fluchtenden Schraubelementen, die mit einer dünnen Schraubhülse im Innenraum der Feder (27) und der Druckhülse (29) im Eingriff stehen.

Die Ritzeinheit (6) weist an der der Abtriebsscheibe (20) gegenüberliegenden Seite ein Druckstück (31) auf, welches nach außen vorsteht und eine zur Achse (10) konzentrische Form und Anordnung aufweist. Das Druckstück (31) kann eine gewölbte Außenseite haben und steht über ein Lager (32), insbesondere in Wälzlager, mit dem losen Flansch (26) in Verbindung. Das Lager (32) ist zwischen diagonal gegenüberliegenden Schultern des Druckstücks (31) und des Losflansches (26) eingespannt. Ein axialer Druck durch die Breitenverstellung (13) schiebt das Druckstück (31) zur Abtriebsscheibe (20) hin, wobei über das Lager (32) der Losflansch (26) und das Ritzblatt (8) gegen die Kraft der Feder (27) mitgenommen werden. Der Losflansch (26) drückt dabei auf die Druckhülse (29), welche die Druckfeder (27) komprimiert. Bei Entlastung distanziert die Feder (27) wieder die Ritzblätter (7,8).

Figur 6 bis 8 verdeutlichen ein Ausführungsbeispiel der Stellachse (13) für die Breitenverstellung der Ritzeinheit (6). Diese weist einen Stellantrieb (52) mit einem jenseits der Grundplatte (33) an einem Ausleger (68) des Ritzträgers (34) angeordneten Antriebsmittel (53) auf, welches z.B. als elektrischer Spindelmotor mit einer Stellspindel (56) ausgebildet ist, die mit einem Gewinde im Ausleger (68) kämmt und dadurch die gesteuerte Motordrehung in eine gesteuerte Vorschubbewegung umsetzt.

Das Stellmittel (54) zur Übertragung des Vorschubs und der Kraft besteht in der gezeigten Ausführungsform aus einem abgewinkelten Stellhebel, der um ein am Ritzträger (34) angeordnetes Lager (55) mit Achsausrichtung quer zur Drehachse (10) drehbar ist. Der Stellhebel (54) ist mehrteilig ausgebildet und weist im gezeigten Ausführungsbeispiel ein Hebelteil (60) auf, das als Basis mit dem Lager (55) ausgebildet ist und sich zum Antriebsmittel (53) hin erstreckt, wobei die Stellspindel (56) mit einer Kugel am hinteren Hebelende (59) angreift. Das Hebelende (59) kann hierfür gemäß Figur 8 eine schräge Anlagefläche bieten. Der Stellhebel (54) weist ein zweites Hebelteil (61) auf, welches als Schwenkteil ausgebildet ist und sich um eine querliegende Achse (62) gegenüber dem ersten Hebelteil (60) drehen kann. Die Achsen (10,62) können parallel sein. Das Schwenkteil (61) erstreckt sich parallel zum Ritzträger (34) zur Ritzeinheit (6) hin, übergreift diese radial und liegt mit dem vorderen Hebelende (58) am Druckstück (31) an. Die Hebelteile (60,61) sind miteinander über die Achse (62) und einen Anschlag (67) verbunden, wobei sie für die Breitenverstellung gemeinsam eine Schwenkbewegung um das Lager (55) ausführen.

Am kurzen Ende des abgewinkelten Basisteils (60) greift eine Feder (57) an, die gegen den Stellantrieb (52) und das Antriebsmittel (53) wirkt und die unterhalb des Lagers (55) angeordnet ist. Die Gegenfeder (57) drückt über die Hebelbewegung gegen das Druckstück (31) und entwickelt in Verbindung mit dem Hebelverhältnis eine Andrückkraft, die größer als die spreizende Kraft der Feder (27) in der Ritzeinheit (6) ist. Die Entspannung der Feder (57) und die Schwenkbewegung werden begrenzt durch den Stellantrieb (52) und dessen Ausfahrweg. Der Stellantrieb (52) stellt hierdurch den Andrückweg des Stellmittels (54) in Richtung der Drehachse (10) und damit die Ritzbreite ein. Das vordere Hebelende (58) drückt dabei auf das relativ in Ruhe befindliche Druckstück (31), gegenüber dem sich im Sägebetrieb die angetriebene Ritzeinheit (6) drehen kann. Das Stellmittel (54) kann von der Ritzeinheit (6) gelöst werden. Für die gezeigte Ausführungsform eines schwenkbaren Stellmittels (54) ist dessen zweiteilige oder mehrteilige Ausbildung von Vorteil und ermöglicht das besagte Lösen. Hierzu kann das Schwenkteil (61) um die quer zum Lager (55) ausgerichtete Achse (62) schwenken, wobei sich das vordere Hebelende (58) vom Druckstück (31) entfernt und die Ritzeinheit (6) zur Demontage freigegeben wird. Figur 11 und 13 zeigen diese Entnahmestellungen (70) mit abgeschwenktem Hebelteil (61).

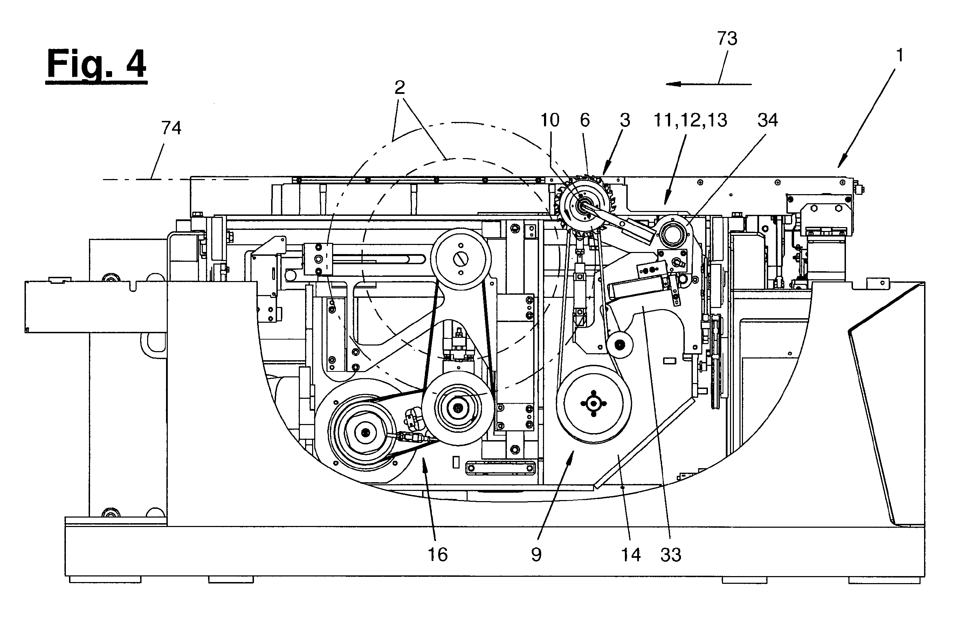

Gemäß Figur 4 und 14 kann bei abgenommener Ritzeinheit (6) der entstehende Freiraum für ein im Durchmesser vergrößertes Sägeblatt (2) genutzt werden, das sich über die zurückversetzte Abtriebsscheibe (20) hinaus erstrecken kann.

Der mehrteilige Stellhebel (54) kann eine Rückstellung (64) aufweisen, welche die Betriebslage in der Arbeitsstellung (69) mit Anlage am Druckstück (31) sichert. Hierfür weist die Achse (62) einen in einem Ansatz des ersten Hebelteils (60) drehbar gelagerten Achskörper (63) auf, dessen Drehlagen durch eine oder mehrere Rasten (66) definiert und gesichert werden können. Hierfür kann es z.B. zwei Rastpositionen für die Arbeits-und Entnahmestellung (69,70) geben. Am Achskörper (63) greift rückseitig ein Rückstellelement (65) auf, welches z.B. als Rückstellfeder, insbesondere als Torsionsfeder, ausgebildet ist und das Hebelteil (61) in Anlage am Hebelteil (60) zieht, wobei auch der rückwärtige Rückstellanschlag (67) zur Lagedefinition wirksam wird. Die Gegenfeder (57) greift in Höhe des Rückstellanschlags (67) am Hebelteil (60) an. Bei einer Schwenkbewegung des Hebelteils (60) um das Lager (55) wird das Schwenkteil (61) mitgenommen.

Die Stellachsen (11,12,13) und ihre Stellantriebe (38,45,52) sind steuerbar. Zu diesem Zweck können sie mit der Steuerung der Sägemaschine (1) oder einer separaten Steuerung verbunden sein. Die Betätigung der Stellachsen (11,12,13) ist unabhängig von der Schwenkverstellung des Vorritzers (3) und kann auch in dessen Schräglagen erfolgen. Die Ritzeinheit (6) kann dadurch in allen Lagen genau auf das Sägeblatt (2) ausgerichtet werden. In der Schwenklage kann die Höhenverstellung (11) an die seitliche Ausladung der aus dem Maschinentisch (4) herausragenden Ritzblätter (7,8) angepasst werden.

Figur 15 bis 17 zeigen ein zweites Ausführungsbeispiel eines mehrachsigen Vorritzers (3) mit drei spielfreien Stellachsen (11,12,13) und Stellantrieben (38,45,52). Die Ritzeinheit (6) und die Antriebseinheit (9) können die gleiche wie im ersten Ausführungsbeispiel sein. Unterschiede bestehen im wesentlichen in der Gestaltung des Ritzträgers (4) und der Stellachsen (11,12,13) sowie deren Stellantrieben (38,45,52).

Die Stellantriebe (38,45,52), insbesondere deren Antriebsmittel (39,46,53) und ggf. Begrenzer (41,48), sind in diesem Ausführungsbeispiel gemeinsam an einer Seite des Grundträgers (33) angeordnet, z.B. an der Frontseite oder Bedienseite der Sägemaschine (1). Die Antriebsmittel (39,46,53) und ggf. Begrenzer (41,48) sind mit ihren Wirkrichtungen parallel zur Hauptebene des Grundträgers (33) ausgerichtet, so dass der Vorritzer (3) eine sehr kompakte Bauweise und kleine Störkontur hat.

Wie Figur 15 verdeutlicht, ist der Ritzträger (34) in diesem Ausführungsbeispiel als Lenkergetriebe, insbesondere Parallelogrammlenkergetriebe, ausgebildet und weist einen ersten Schwenkhebel (35) mit einem Lager (36) und einen parallel darunter angeordneten und nachfolgend als Lenker (77) bezeichneten zweiten Schwenkhebel auf, die endseitig durch ein aufrechtes stangenartiges Verbindungsglied (78) mit Kugelgelenken gekoppelt sind, welches sich zur Ritzeinheit (6) hin erstreckt.

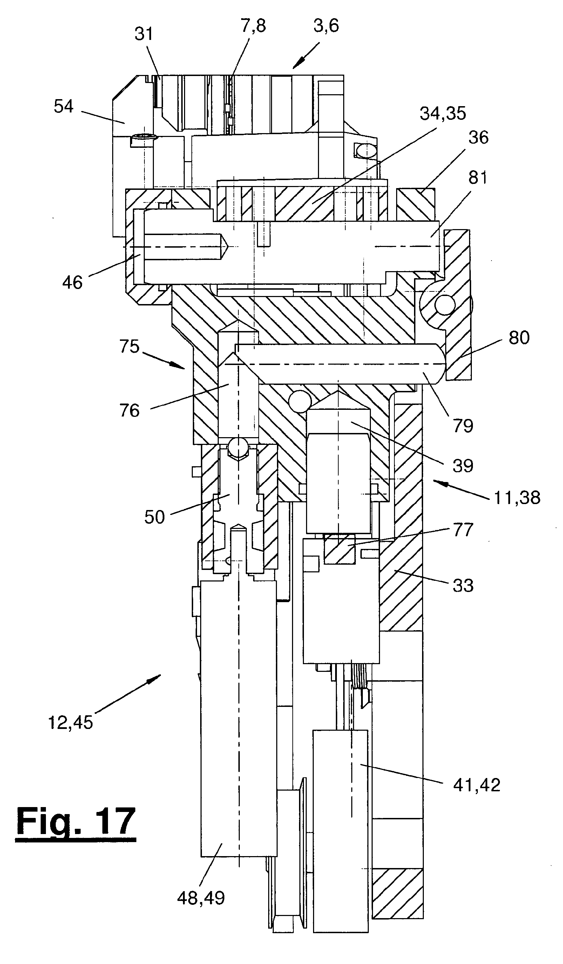

Figur 15 und 17 verdeutlichen die Ausbildung der Stellachse (11) für die Höhenverstellung und des zugehörigen Stellantriebs (38). Der Stellantrieb (38) weist ein Antriebsmittel (39) im oder am Grundgestell (33) auf, welches in diesem Ausführungsbeispiel auf den Lenker (77) einwirkt und als Zylinder, insbesondere als pneumatischer Zylinder, ausgebildet ist. Der Stellantrieb (38) weist ferner einen Begrenzer (41) mit einem Stellmotor (42) und einer Stellspindel (43) auf, wobei der Stellmotor (42) in dieser Ausführungsform vertikal ausgerichtet sein kann. Der Begrenzer (41) wirkt ebenfalls auf den Lenker (77) und begrenzt dessen Schwenkwinkel. Hierüber wird die Höhenlage der am Ende des Schwenkhebels (35) gelagerten Ritzeinheit (6) eingestellt. In diesem Ausführungsbeispiel ist die Stellachse (11) für die Höhenverstellung mit ihrem Stellantrieb (38) getrennt vom Schwenkhebel (35) des Ritzträgers (34) angeordnet und wirkt auf diesen mittelbar über den Parallelogrammlenker (77) und das Verbindungsglied (78) ein.

Figur 15 und 17 zeigen auch die abgewandelte Ausgestaltung der Stellachse (12) für die Lagenverstellung und ihres Stellantriebs (45). Das Antriebsmittel (46) kann wieder ein Zylinder, insbesondere ein pneumatischer Zylinder, sein, der auf ein querliegendes Tragelement (81) einwirkt, das als Lager- oder Tragbolzen für den Schwenkhebel (35) ausgebildet ist und sich in einem gestellfesten Hebellager (36) dreht. Mit dem Stellantrieb (45) wird der Lagerbolzen (81) in seiner Längsrichtung verschoben, wobei der Schwenkhebel (45) mit der Ritzeinheit (6) zur Einstellung der seitlichen Lage mitgenommen wird.

Der Stellantrieb (45) weist einen Begrenzer (48) auf, der als Stellmotor (49) mit einer Stellspindel (50) und einer Kraftumlenkung (75) ausgebildet ist. Hierüber wird die Wirkrichtung des z.B. vertikal angeordneten Stellmotors (49) auf den horizontalen Lagerbolzen (81) übertragen. Die Kraftumlenkung (75) wird von einer Keilumlenkung (76) gebildet, bei der ein mit einer Stellspindel (50) verbundenes Übertragungselement über einen schrägen Keil auf einen horizontal und axial verschieblichen Stößel (79) einwirkt, welcher wiederum über einen gestellfest gelagerten Kipphebel (80) auf das Ende des Lagerbolzens (81) einwirkt und dessen Axialstellung definiert und einstellt. Die Stellantriebe (38,45) für die Höhen- und Lagenverstellung und insbesondere deren Begrenzer (41,48) wirken auf getrennte Lager des Schwenkhebels (35) und des Parallelogrammlenkers (77) ein, wodurch die Lagerbelastung gemindert und die Stellpräzision erhöht wird.

Figur 15 und 16 verdeutlichen eine abgewandelte Ausbildung der Stellachse (13) für die Ritzbreitenverstellung und ihres Stellantriebs (52), der wiederum am Ritzträger (34) und dessen Schwenkhebel (35) angeordnet ist. Das Antriebsmittel (53) ist als Spindelmotor ausgebildet, der über ein Stellmittel (54) auf die Ritzeinheit (6) und insbesondere deren Druckstück (31) einwirkt. Das Stellmittel (54) ist als Stellarm ausgebildet, der in diesem Ausführungsbeispiel linear entlang einer Bolzenachse bewegt wird, die parallel zur Drehachse der Ritzblätter (7,8) ausgerichtet ist. Der Tragbolzen (82) ist mittels einer geeigneten Schiebelagerung in einem verbreiterten Bereich des Schwenkhebels (35) axial beweglich geführt, wobei er am einen Ende mit dem Stellmittel (54) verbunden ist und am anderen Ende von einer schematisch dargestellten Feder (57) beaufschlagt wird.

Das Stellmittel (54) ist um eine Achse (62) schwenkbar am Tragbolzen (82) gelagert und kann hierdurch zum Lösen der Ritzeinheit (6) weggeschwenkt werden. Anschläge definieren die Arbeits- und Löseposition, wobei auch eine Feder unterstützend wirken kann. Der Spindelmotor (53) wirkt über seine Stellspindel (56) und eine Kraftumlenkung (57) auf den Tragbolzen (82) ein und verschiebt diesen zur Verstellung der Ritzbreite. Die Kraftumlenkung (75) kann eine Keilumlenkung (76) aufweisen, mit der die vertikale Kraft und Stellwirkung des Antriebsmittels (53) in eine vertikale Verstellbewegung des Tragbolzens (82) und des Stellmittels (54) umgelenkt wird. Auch in diesem Ausführungsbeispiel greift das Stellmittel (54) außen an der Ritzeinheit (6) an und übergreift diese quer zur Drehachse (10). Die Feder (57) kann stärker als die Feder (27) in der Ritzeinheit (6) sein.

Abwandlungen der gezeigten und beschriebenen Ausführungsformen sind in verschiedener Weise möglich. Dies betrifft z.B. eine kinematische und/oder anordnungsmäßige Umkehr bei den gezeigten Stellantrieben (38,45,52). Beim Stellantrieb (45) zur Lagenverstellung kann z.B. der Stellmotor (49) als Antriebsmittel statt als Begrenzer wirken, wobei der Zylinder als pneumatische Feder wirkt und den Stellantrieb (45) spielfrei macht.

Statt einer Schwenklagerung zwischen Grundkörper (33) und Ritzträger (34) ist eine Schiebelagerung mit ein oder zwei Freiheitsgraden und entsprechender Anpassung der Stellachse (11) und/oder (12) möglich. Die Stellachsen (11,12) können in einer Variante voneinander getrennt angeordnet sein und jeweils eigene Lager haben.

Auch die Breitenverstellung (13) kann in anderer Weise ausgebildet sein. Das Stellmittel (54) kann z.B. als linear verstellbarer Druckarm ausgebildet sein, der mit einem entsprechenden Linearantrieb verbunden ist, der parallel zur Drehachse (10) wirkt und der z.B. ähnlich wie der Stellantrieb (45) für die Stellachse (12) im ersten Ausführungsbeispiel ausgebildet sein kann. Auch in dieser Variante greift das Stellmittel (54) außenseitig an der Ritzeinheit (6) an und übergreift diese quer zur Drehachse (10). Der Antrieb des Stellmittels (54), insbesondere ein Antrieb für einen linear verstellbaren Druckarm oder ein anderes die Bewegung und Druckkraft übertragendes Stellmittel, kann in einer abgewandelten Ausführung an einem beweglichen Ritzträger (34) angeordnet sein.

Daneben sind weitere Ausführungsvarianten möglich, die im Zusammenwirken mit der rückseitigen Abstützung am Ritzträger (34) zu einer zangenartigen Spann- und Einstellfunktion der Stellachse (13) und ihres Stellantriebs (52) für die Ritzeinheit (6) führen.

Die Stellachsen (11,12,13) haben bevorzugt eine parallele Ausrichtung. Auch die Stellmittel (40,47,54) sowie deren Antriebsmittel (39,46,53) und/oder Begrenzer (41,48) können parallele Wirkachsen haben. Die Antriebsmittel (39,46,53) können sich auch alle an der gleichen Seite des Grundträgers (33) befinden.

Von den vorbeschriebenen Ausführungsbeispielen haben die nachfolgenden Merkmale eine bevorzugte Bedeutung, die sie jeweils einzeln für sich genießen. Bedeutung haben die Merkmale auch in verschiedenen Kombination untereinander.

Der bevorzugt mehrachsige Vorritzer (3) weist einen bevorzugt plattenförmigen Grundträger (33) auf, der mit einem Schwenkträger (14) für das Sägeblatt (2) verbunden ist. Ein Ritzträger (34) kann einen Schwenkhebel (35)aufweisen. Eine Stellachse (11,12) für die Verstellung der Ritzeinheit (6) kann zwischen dem Grundträger (33) und dem Ritzträger (34) angeordnet sein.

Ein Antriebsmittel (39,46) einer Stellachse (11,12,13) kann z.B. als Zylinder und ein Stellmittel (40,47) als Kolbenstange oder als Kolben ausgebildet sein. Bei evtl. Spielfreiheit einer Stellachse (11,12,13) oder eines Stellantriebs (38,45) kann ein Begrenzer (41,48) vorhanden sein, der z.B. einen steuerbaren Stellmotor (42,49) mit einem Anschlag (44,51) aufweist. Ein steuerbarer Stellmotor (42,49) kann als Elektromotor mit einer Stellspindel (43,50) ausgebildet sein. Ein Anschlag (44,51) eines Begrenzers (41,48) der einen Stellachse kann bewegungstolerant bezüglich einer anderen Stellachse sein. Eine Kraftumlenkung (75) eines Stellmittels (57,54) kann eine Keilumlenkung (76) aufweisen.

Eine Ritzeinheit (6) kann als handhabbare und demontierbare Baueinheit ausgebildet sein. Eine Ritzeinheit (6) kann auf der einen Außenseite mit einer Antriebseinheit (9) drehschlüssig koppelbar sein und auf der anderen, bevorzugt gegenüberliegenden, Außenseite ein Drückstück (31) mit einem Lager (32) aufweisen. Ein solches Lager (32) kann zwischen dem Druckstück (31) und einem axial beweglichen Flansch (26) mit einem Ritzblatt (8) angeordnet sein.

Ein Stellantrieb (52) für eine Ritzbreitenverstellung kann an einem beweglichen Ritzträger (34), insbesondere an einem Schwenkhebel (35), angeordnet sein. Ein Stellmittel (54) für die Ritzeinheit (6) kann außenseitig an der Ritzeinheit (6) vorbeigreifen. Ein Stellmittel (54) kann auch mit einstellbarem Stellweg auf ein Druckstück (31) der Ritzeinheit (6) einwirken. Ein Stellmittel (54) kann lösbar am Druckstück (31) anliegen. Ein Stellmittel (54) kann beweglich an einem Ritzträger (34) gelagert (55) sein. Ein Stellmittel (54) kann als schwenkbarer Stellhebel oder Stellarm ausgebildet sein. Ein Stellmittel (54) kann ferner mehrere miteinander beweglich verbundene Hebelteile (60,61) aufweisen, wobei ein Hebelteil (61) lösbar mit der Ritzeinheit (6) verbindbar ist. Die Hebelteile (60,61) können drehbar miteinander verbunden sein und ein Rückstellelement (65) sowie einen Anschlag (67) aufweisen. Ein Antriebsmittel (53) einer Stellachse (13) kann einen Spindelmotor (53) und eine an einem Stellmittel (54) wirkende Gegenfeder (57) aufweisen. Hierbei kann der Spindelmotor (53) entspannend auf die Ritzeinheit (6) wirken, wobei die Gegenfeder (57) gegen eine Feder (27) der Ritzeinheit (6) arbeitet und stärker als die Feder (27) ist. Ein Antriebsmittel (53) einer Stellachse (13) kann an der anderen Seite des Grundträgers (33) angeordnet und durch einen Ausleger (68) mit dem Ritzträger (34) verbunden sein.

Bei einer Sägemaschine (1) können das Sägeblatt (2) und der mehrachsige Vorritzer (3) gemeinsam und nach mehreren Richtungen schwenkbar sein. Bei einer Sägemaschine (1) kann die Ritzeinheit (6) abnehmbar sein, insbesondere bei Einsatz besonders großer Sägeblätter (2).

### BEZUGSZEICHENLISTE

- 1: Sägemaschine, Formatkreissäge
- 2: Sägeblatt, Kreissägeblatt
- 3: mehrachsiger Vorritzer, 3-Achs-Vorritzer
- 4: Maschinentisch, Besäumtisch
- 5: Schutzhaube
- 6: Ritzeinheit
- 7: Ritzblatt
- 8: Ritzblatt
- 9: Antriebseinheit, Vorritzantrieb
- 10: Drehachse
- 11: Stellachse, Höhenverstellung
- 12: Stellachse, Lagenverstellung
- 13: Stellachse, Breitenverstellung
- 14: Schwenkträger
- 15: Schwenkführung
- 16: Sägeblattantrieb
- 17: Motor
- 18: Treibmittel, Riemen
- 19: Spanner
- 20: Abtriebsscheibe, Riemenscheibe
- 21: Lagerflansch
- 22: Lager, Wälzlager
- 23: Mitnehmer, Bohrung
- 24: Flansch, Festflansch
- 25: Mitnehmer, Stift
- 26: Flansch, Losflansch
- 27: Feder, Druckfeder
- 28: Abstandsbegrenzer
- 29: Hülse, Druckhülse
- 30: Anschlagmittel, Anschlagschraube
- 31: Druckstück
- 32: Lager, Wälzlager
- 33: Grundträger, Grundplatte
- 34: Ritzträger
- 35: Schwenkhebel
- 36: Lager, Hebellager
- 37: Achse, Schwenk- und Schiebeachse
- 38: Stellantrieb für Höhenverstellung
- 39: Antriebsmittel, Zylinder
- 40: Stellmittel, Kolbenstange
- 41: Begrenzer
- 42: Stellmotor
- 43: Stellspindel
- 44: Anschlag
- 45: Stellantrieb für Lagenverstellung
- 46: Antriebsmittel, Zylinder
- 47: Stellmittel, Kolben
- 48: Begrenzer
- 49: Stellmotor
- 50: Stellspindel
- 51: Anschlag
- 52: Stellantrieb für Breitenverstellung
- 53: Antriebsmittel, Spindelmotor
- 54: Stellmittel, Stellhebel
- 55: Lager, Drehachse
- 56: Stellspindel
- 57: Feder, Druckfeder
- 58: Hebelende vorn
- 59: Hebelende hinten
- 60: Hebelteil, Basisteil
- 61: Hebelteil, Schwenkteil
- 62: Achse
- 63: Achskörper
- 64: Rückstellung
- 65: Rückstellelement, Rückstellfeder
- 66: Raste
- 67: Anschlag, Rückstellanschlag
- 68: Ausleger
- 69: Arbeitsstellung
- 70: Entnahmestellung
- 71: Kopfbereich
- 72: Störkontur
- 73: Vorschubrichtung
- 74: Achse, Schwenkachse, Kippachse
- 75: Kraftumlenkung
- 76: Keilumlenkung
- 77: Lenker, Parallelogrammlenker
- 78: Verbindungsglied
- 79: Stößel
- 80: Kipphebel
- 81: Tragelement, Lagerbolzen
- 82: Tragelement, Tragbolzen

## Patentansprüche

1. Mehrachsiger Vorritzer mit einer angetriebenen verstellbaren Ritzeinheit (6) für rotierende Sägeblätter (2) an einer Sägemaschine (1), wobei der mehrachsige Vorritzer (3) Stellachsen (11,12) für die Verstellung der Ritzeinheit (6) in deren Höhe und deren Seitenlage aufweist und wobei der mehrachsige Vorritzer (3) um eine längs der Sägeblatthauptebene sich erstreckende Achse (74) schwenkbar gelagert und an unterschiedliche Sägeblattneigungen anpassbar ist, **dadurch gekennzeichnet, dass** die Stellachsen (11,12) Stellantriebe (38,45) mit Antriebsmitteln (39,46) aufweisen, wobei die Antriebsmittel (39,46) unterhalb der Ritzeinheit (6) angeordnet sind.

2. Mehrachsiger Vorritzer nach Anspruch 1, **dadurch gekennzeichnet, dass** der mehrachsige Vorritzer (3) eine Stellachse (13) mit einem Stellantrieb (52) und mit einem unterhalb der Ritzeinheit (6) angeordneten Antriebsmittel (53) für die Verstellung der Ritzeinheit (6) in deren Breite aufweist.

3. Mehrachsiger Vorritzer nach Anspruch 1 oder 2,
**dadurch gekennzeichnet, dass** der mehrachsige Vorritzer (3) gemeinsam mit dem Sägeblatt (2) an einem Schwenkträger (14) angeordnet ist, der um eine längs der Sägeblatthauptebene sich erstreckende Achse (74) schwenkbar gelagert ist.

4. Mehrachsiger Vorritzer nach Anspruch 1, 2 oder 3,
**dadurch gekennzeichnet, dass** der mehrachsige Vorritzer (3) eine Antriebseinheit (9) mit einem tiefliegenden und unterhalb der Ritzeinheit (6) angeordneten Motor (17) aufweist.

5. Mehrachsiger Vorritzer nach einem der vorhergehenden Ansprüche, **dadurch gekennzeichnet, dass** eine Ritzeinheit (6) lösbar an einer Antriebseinheit (9) des mehrachsigen Vorritzers (3) angeordnet ist.

6. Mehrachsiger Vorritzer nach einem der vorhergehenden Ansprüche, **dadurch gekennzeichnet, dass** der mehrachsige Vorritzer (3) einen ggf. mit einem Schwenkträger (14) verbundenen Grundträger (33) und einen daran in der Höhe und/oder der Seitenlage verstellbaren, insbesondere schwenkbar und seitlich verschiebbar gelagerten, Ritzträger (34) mit einer Ritzeinheit (6) aufweist.

7. Mehrachsiger Vorritzer nach einem der vorhergehenden Ansprüche, **dadurch gekennzeichnet, dass** ein Stellantrieb (38,45) für eine Stellachse (11,12) als pneumatischer Antrieb mit einem einstellbaren Begrenzer (41,48) ausgebildet ist.

8. Mehrachsiger Vorritzer nach einem der vorhergehenden Ansprüche, **dadurch gekennzeichnet, dass** ein Stellantrieb (38) für eine Höhenverstellung (11) ein an einem Grundträger (33) abgestütztes Antriebsmittel (39) und ein an einem Ritzträger (34) im Bereich einer Ritzeinheit (6) angreifendes Stellmittel (40) aufweist, wobei ein Stellantrieb (45) für eine Lagenverstellung (12) ein am Ritzträger (34) nahe seines Lagers (36) abgestütztes Antriebsmittel (46) und ein am Grundträger (33) angreifendes Stellmittel (47) aufweist.

9. Mehrachsiger Vorritzer nach einem der vorhergehenden Ansprüche, **dadurch gekennzeichnet, dass** ein Antriebsmittel (39,46) einer Stellachse (11,12,13) als Zylinder und ein Stellmittel (40,47) als Kolbenstange oder als Kolben ausgebildet ist und ein evtl. Begrenzer (41,48) einen steuerbaren Stellmotor (42,49) mit einem Anschlag (44,51) aufweist.

10. Mehrachsiger Vorritzer nach einem der vorhergehenden Ansprüche, **dadurch gekennzeichnet, dass** die Antriebseinheit (9) der Ritzeinheit (6) einen an einem Grundträger (33) angeordneten Motor (17) und eine an einem Ritzträger (34) endseitig angeordnete Abtriebsscheibe (20) sowie ein umlaufendes Triebmittel (18), insbesondere einen Riemen, aufweist, wobei die Ritzeinheit (6) mit der Abtriebsscheibe (20) drehschlüssig gekoppelt und fest oder lösbar verbunden ist.

11. Mehrachsiger Vorritzer nach einem der vorhergehenden Ansprüche, **dadurch gekennzeichnet, dass** eine Ritzeinheit (6) drehschlüssig miteinander gekoppelte und im axialen Abstand zueinander verstellbare Ritzblätter (7,8) aufweist, wobei zwischen den Ritzblättern (7,8) eine Feder (27) und ein Abstandsbegrenzer (28) angeordnet ist.

12. Mehrachsiger Vorritzer nach einem der vorhergehenden Ansprüche, **dadurch gekennzeichnet, dass** ein Stellantrieb (52) für die Stellachse (13) ein steuerbares Antriebsmittel (53) mit einem von außen und bevorzugt mit einstellbarem Stellweg sowie lösbar auf die Ritzeinheit (6) einwirkenden Stellmittel (54) aufweist.

13. Mehrachsiger Vorritzer nach einem der vorhergehenden Ansprüche, **dadurch gekennzeichnet, dass** Stellantriebe (38,45,52) und ggf. Begrenzer (41,48) für Stellachsen (11,12,13) gemeinsam an einer Seite eines Grundträgers (33) angeordnet sind.

14. Mehrachsiger Vorritzer nach einem der vorhergehenden Ansprüche, **dadurch gekennzeichnet, dass** ein Stellantrieb (38,45,52) für eine Stellachse (11, 12, 13) eine Kraftumlenkung (75) aufweist.

15. Sägemaschine mit einem rotierenden und schwenkbaren Sägeblatt (2) und einem schwenkbaren mehrachsigen Vorritzer (3), **dadurch gekennzeichnet, dass** der mehrachsige Vorritzer (3) nach mindestens einem der Ansprüche 1 bis 14 ausgebildet ist.

## Claims

1. Multi-axle prescorer having a driven adjustable scoring unit (6) for rotating saw blades (2) on a machine saw (1), wherein the multi-axle prescorer (3) has actuating shafts (11, 12) for adjusting the height and the lateral position of the scoring unit (6), and wherein the multi-axle prescorer (3) is mounted pivotably about an axis (74) extending along the main plane of the saw blade and is adaptable to different inclinations of the saw blade, **characterized in that** the actuating shafts (11, 12) have actuators (38, 45) having drive means (39, 46), wherein the drive means (39, 46) are arranged beneath the scoring unit (6).

2. Multi-axle prescorer according to Claim 1, **characterized in that** the multi-axle prescorer (3) has an actuating shaft (13) having an actuator (52) and having a drive means (53), arranged beneath the scoring unit (6), for adjusting the width of the scoring unit (6).

3. Multi-axle prescorer according to Claim 1 or 2, **characterized in that** the multi-axle prescorer (3) is arranged together with the saw blade (2) on a pivoting carrier (14) which is mounted pivotably about an axis (74) extending along the main plane of the saw blade.

4. Multi-axle prescorer according to Claim 1, 2 or 3, **characterized in that** the multi-axle prescorer (3) has a drive unit (9) having a low-lying motor (17) arranged beneath the scoring unit (6).

5. Multi-axle prescorer according to one of the preceding claims, **characterized in that** a scoring unit (6) is arranged detachably on a drive unit (9) of the multi-axle prescorer (3).

6. Multi-axle prescorer according to one of the preceding claims, **characterized in that** the multi-axle prescorer (3) has a main carrier (33) optionally connected to a pivoting carrier (14), and a scoring-unit carrier (34), the height and/or lateral position of which is adjustable and which is mounted in particular in a pivotable and laterally displaceable manner, having a scoring unit (6).

7. Multi-axle prescorer according to one of the preceding claims, **characterized in that** an actuator (38, 45) for an actuating shaft (11, 12) is in the form of a pneumatic drive having a settable limiter (41, 48).

8. Multi-axle prescorer according to one of the preceding claims, **characterized in that** an actuator (38) for height adjustment (11) has a drive means (39) supported on a main carrier (33), and an actuating means (40) acting on a scoring-unit carrier (34) in the region of a scoring unit (6), wherein an actuator (45) for position adjustment (12) has a drive means (46) supported on the scoring-unit carrier (34) close to its bearing (36), and an actuating means (47) acting on the main carrier (33).

9. Multi-axle prescorer according to one of the preceding claims, **characterized in that** a drive means (39, 46) of an actuating shaft (11, 12, 13) is in the form of a cylinder and an actuating means (40, 47) is in the form of a piston rod or of a piston, and an optional limiter (41, 48) has a controllable servomotor (42, 49) having a stop (44, 51).

10. Multi-axle prescorer according to one of the preceding claims, **characterized in that** the drive unit (9) of the scoring unit (6) has a motor (17) arranged on the main carrier (33) and an output disc (20) arranged on the end-side of a scoring-unit carrier (34), and also a revolving driving means (18), in particular a belt, wherein the scoring unit (6) is coupled to the output disc (20) for conjoint rotation and is connected fixedly or releasably thereto.

11. Multi-axle prescorer according to one of the preceding claims, **characterized in that** a scoring unit (6) has scoring blades (7, 8) which are coupled together for conjoint rotation and are adjustable at an axial distance from one another, wherein a spring (27) and a distance limiter (28) are arranged between the scoring blades (7, 8).

12. Multi-axle prescorer according to one of the preceding claims, **characterized in that** an actuator (52) for the actuating shaft (13) has a controllable drive means (53) having an actuating means (54) that acts from the outside and preferably with a settable actuating travel and also in a detachable manner on the scoring unit (6).

13. Multi-axle prescorer according to one of the preceding claims, **characterized in that** actuators (38, 45, 52) and optionally limiters (41, 48) for actuating shafts (11, 12, 13) are arranged jointly on one side of a main carrier (33).

14. Multi-axle prescorer according to one of the preceding claims, **characterized in that** an actuator (38, 45, 52) for an actuating shaft (11, 12, 13) has a force deflector (75).

15. Machine saw having a rotating and pivotable saw blade (2) and a pivotable multi-axle prescorer (3), **characterized in that** the multi-axle prescorer (3) is formed according to at least one of Claims 1 to 14.

## Revendications

1. Inciseur à plusieurs axes comprenant une unité d'incision (6) entraînée réglable pour des lames de scie rotatives (2) d'une scie (1), l'inciseur à plusieurs axes (3) présentant des axes de réglage (11, 12) pour le réglage de l'unité d'incision (6) en hauteur et en position latérale, et l'inciseur à plusieurs axes (3) étant monté de manière à pouvoir pivoter autour d'un axe (74) s'étendant le long du plan principal de la lame de scie et pouvant être adapté à différentes inclinaisons de la lame de scie, **caractérisé en ce que** les axes de réglage (11, 12) présentent des entraînements de réglage (38, 45) avec des moyens d'entraînement (39, 46), les moyens d'entraînement (39, 46) étant disposés en dessous de l'unité d'incision (6).

2. Inciseur à plusieurs axes selon la revendication 1, **caractérisé en ce que** l'inciseur à plusieurs axes (3) présente un axe de réglage (13) avec un entraînement de réglage (52) et avec un moyen d'entraînement (53) disposé en dessous de l'unité d'incision (6) pour le réglage de l'unité d'incision (6) en largeur.

3. Inciseur à plusieurs axes selon la revendication 1 ou 2, **caractérisé en ce que** l'inciseur à plusieurs axes (3) est disposé conjointement avec la lame de scie (2) sur un support pivotant (14) qui est monté de manière à pouvoir pivoter autour d'un axe (74) s'étendant le long du plan principal de la lame de scie.

4. Inciseur à plusieurs axes selon la revendication 1, 2 ou 3, **caractérisé en ce que** l'inciseur à plusieurs axes (3) présente une unité d'entraînement (9) avec un moteur (17) situé en position basse et disposé en dessous de l'unité d'incision (6).

5. Inciseur à plusieurs axes selon l'une quelconque des revendications précédentes, **caractérisé en ce qu'**une unité d'incision (6) est disposée de manière détachable sur une unité d'entraînement (9) de l'inciseur à plusieurs axes (3).

6. Inciseur à plusieurs axes selon l'une quelconque des revendications précédentes, **caractérisé en ce que** l'inciseur à plusieurs axes (3) présente un support de base (33) éventuellement connecté à un support pivotant (14) et un support d'incision (34) muni d'une unité d'incision (6), réglable sur le support de base en hauteur et/ou en position latérale, notamment monté de manière pivotante et déplaçable latéralement.

7. Inciseur à plusieurs axes selon l'une quelconque des revendications précédentes, **caractérisé en ce qu'**un entraînement de réglage (38, 45) pour un axe de réglage (11, 12) est réalisé sous forme d'entraînement pneumatique avec un limiteur ajustable (41, 48).

8. Inciseur à plusieurs axes selon l'une quelconque des revendications précédentes, **caractérisé en ce qu'**un entraînement de réglage (38) pour un réglage en hauteur (11) présente un moyen d'entraînement (39) supporté sur un support de base (33) et un moyen de réglage (40) venant en prise sur un support d'incision (34) dans la région d'une unité d'incision (6), un entraînement de réglage (45) pour un réglage de position (12) présentant un moyen d'entraînement (46) supporté sur le support d'incision (34) à proximité de son palier (36) et un moyen de réglage (47) venant en prise sur le support de base (33).

9. Inciseur à plusieurs axes selon l'une quelconque des revendications précédentes, **caractérisé en ce qu'**un moyen d'entraînement (39, 46) d'un axe de réglage (11, 12, 13) est réalisé sous forme de cylindre et un moyen de réglage (40, 47) est réalisé sous forme de tige de piston ou sous forme de piston et un limiteur éventuel (41, 48) présente un servomoteur commandable (42, 49) avec une butée (44, 51).

10. Inciseur à plusieurs axes selon l'une quelconque des revendications précédentes, **caractérisé en ce que** l'unité d'entraînement (9) de l'unité d'incision (6) présente un moteur (17) disposé sur un support de base (33) et un disque de sortie (20) disposé du côté de l'extrémité sur un support d'incision (34), ainsi qu'un moyen d'entraînement périphérique (18), en particulier une courroie, l'unité d'incision (6) étant accouplée de manière solidaire en rotation au disque de sortie (20) et étant connectée à celui-ci fixement ou de manière détachable.

11. Inciseur à plusieurs axes selon l'une quelconque des revendications précédentes, **caractérisé en ce qu'**une unité d'incision (6) présente des lames d'incision (7, 8) accouplées de manière solidaire en rotation les unes aux autres et réglables les unes par rapport aux autres suivant une distance axiale, un ressort (27) et un limiteur d'espacement (28) étant disposés entre les lames d'incision (7, 8).

12. Inciseur à plusieurs axes selon l'une quelconque des revendications précédentes, **caractérisé en ce qu'**un entraînement de réglage (52) pour l'axe de réglage (13) présente un moyen d'entraînement commandable (53) avec un moyen de réglage (54) agissant depuis l'extérieur et de préférence avec une course de réglage réglable et de manière détachable sur l'unité d'incision (6).

13. Inciseur à plusieurs axes selon l'une quelconque des revendications précédentes, **caractérisé en ce que** des entraînements de réglage (38, 45, 52) et éventuellement des limiteurs (41, 48) pour des axes de réglage (11, 12, 13) sont disposés conjointement d'un côté d'un support de base (33).

14. Inciseur à plusieurs axes selon l'une quelconque des revendications précédentes, **caractérisé en ce qu'**un entraînement de réglage (38, 45, 52) pour un axe de réglage (11, 12, 13) présente un renvoi de force (75).

15. Scie comprenant une lame de scie (2) rotative et pivotante et un inciseur à plusieurs axes pivotant (3), **caractérisée en ce que** l'inciseur à plusieurs axes (3) est réalisé selon au moins l'une quelconque des revendications 1 à 14.
